# EUROPÄISCHE PATENTSCHRIFT

(11) **EP 2 774 709 B1**
(45) Veröffentlichungstag und Bekanntmachung des Hinweises auf die Patenterteilung: **13.02.2019**
(21) Anmeldenummer: 13006061.9
(22) Anmeldetag: 30.12.2013
(51) Int. Cl.: B23F 17/00, B23F 19/00, B23F 23/12, B23Q 15/02, B23F 5/04, B23F 1/02

(54) **Bearbeitungsverfahren zum Hartfeinbearbeiten von geräuschoptimierten Verzahnungen auf einer Verzahnmaschine**
Precision method for precision grinding of noise optimised gear teeth on a gear cutting machine
Procédé d'usinage pour l'usinage dur de précision d'engrenages optimisés sur le plan acoustique sur une machine à tailler les engrenages

(30) Priorität: 05.03.2013 DE 102013003795
(43) Veröffentlichungstag der Anmeldung: 10.09.2014
(73) Patentinhaber: LIEBHERR-VERZAHNTECHNIK GmbH, 87437 Kempten (DE)
(72) Erfinder: Geiser, Hansjörg, 87487 Wiggensbach (DE)
(74) Vertreter: Laufhütte, Dieter

(56) Entgegenhaltungen:
- DE-A1- 3 704 607
- DE-A1- 3 826 029
- DE-A1- 19 907 363
- DE-C1- 19 625 370
- DE-C1- 19 719 249
- STADTFELD H: "Automated Closed Loop Manufacturing and correction of Bevel Gear Sets", 19970501, 1. Mai 1997 (1997-05-01), Seiten 1-12, XP001571191,

## Beschreibung

Die Erfindung betrifft ein Verfahren zum Wälzschleifen und/oder Verzahnungshonen geräuschoptimierter Verzahnungen auf einer Verzahnmaschine, das zugehörige Messverfahren und die Steuerungssoftware zur entsprechenden Ansteuerung der Verzahnmaschine.

Die Anforderungen an moderne Getriebe hinsichtlich Baugröße, Geräuschverhalten und übertragbarer Leistungen nehmen immer mehr zu. Damit steigen u.a. auch die Anforderungen an die Fertigungsgenauigkeit der verbauten Zahnräder. Um diese Anforderungen zu erfüllen, werden die Zahnräder bei der Herstellung in vielen Fällen mit einer gezielten modifizierten Flankengeometrie versehen, die von der rein evolventischen Flankengeometrie abweicht. Die Modifikationen sind dabei so ausgelegt, dass sie unter Lasteingriffsbedingungen die Laufruhe und das Übertragungsverhalten des Getriebes positiv beeinflussen.

Das Laufgeräusch eines Getriebes wird in wesentlichen Punkten aus der Anregung bzw. vom Schwingungsverhalten der Verzahnung unter den aktuell wirkenden Lasteingriffsbedingungen bzw. vom zeitlichen Verlauf der Zahnkraft im jeweiligen Zahneingriff bestimmt. Die Schwingungsanregung einer Stirnradpaarung unter Last und Drehzahl stellt eine Unregelmäßigkeit der Drehbewegung zwischen Ritzel und Rad dar. Diese Unregelmäßigkeit kann anhand einer veränderlichen Wegübertragung, der Drehwegabweichung bzw. des Drehwegfehlers beschrieben werden. Die Drehwegabweichung bzw. der Drehwegfehler ist eine Funktion der Verzahnungsgeometrie und des elastischen Verhaltens des Getriebe-Gesamtsystems. Der Einfluss der Verzahnungsgeometrie auf das Anregungsverhalten wird maßgebend durch Hauptgeometriekenngrößen, wie Profil- und Sprungüberdeckung, sowie durch die Form der Zahnflankentopologie und durch Herstellabweichungen bestimmt.

Als Ergebnis verschiedener Forschungsvorhaben wurde nun erkannt, dass neben Faktoren wie Sprungüberdeckung, Teilungsgenauigkeit, Kopf- und Fußrücknahmen an den Verzahnungen auch periodische Korrekturen in Form von Welligkeiten auf den Flanken einer Verzahnung einen positiven Einfluss auf die Geräuschanregung einer Verzahnung unter Lasteingriffsbedingungen haben.

Hierzu wurden in den verschiedenen Forschungsvorhaben Berechnungsprogramme erstellt, mit deren Hilfe die Einflüsse von Zahnmodifikationen und -korrekturen auf das Lauf- und Geräuschverhalten von Stirnradpaarungen simuliert werden konnten. Um nun die Berechnung einer geräuscharmen Verzahnungspaarung durchzuführen, ist sehr viel Detailwissen gepaart mit empirischen Untersuchungen notwendig. Die berechneten Ergebnisse müssen in Korrektur- und Modifikationswerte umgerechnet bzw. in einem CNC Bearbeitungsprogramm für die Verzahnmaschine umgesetzt werden. Die Verzahnmaschine muss letztendlich in der Lage sein, diese Korrekturen sehr exakt auf die jeweilige Zahnflanke zu übertragen.

Wie zuvor schon beschrieben sind neben makrogeometrischen Zahnflankenkorrekturen und -modifikationen im Bereich mehrerer Mikrometer, die vor allem den Eingriffs- und Austrittstoß des Verzahnungseingriffs günstig beeinflussen, auch Mikrokorrekturen (Flankenwelligkeiten) auf den Zahnflanken notwendig, die einen geräuscharmen Zahneingriff der Zahnpaarungen zur Folge haben.

Verzahnmaschinen, mit denen Korrekturen der Zahnflanken vorgenommen werden können, sind grundsätzlich schon bekannt.

In der DE 10 2004 057 596 wird so beispielsweise neben einem Schleifwerkzeug und dem zugehörigen Profilierwerkzeug auch das Verfahren zum Profilieren einer Schleifschnecke mit einem dreidimensional modifizierten Breitenbereich beschrieben. Ziel ist hier ein erhöhter Ausnutzungsgrad der Schleifschneckenbreite. Mit einem Profilierzahnrad gemäß dieser Beschreibung sollen 3-dimensionale Korrekturen auf den Zahnflanken zunächst auf die Schleifschnecke und von dort wieder auf das geschliffene Werkstück übertragen werden. Diese Art der Profilierung ist aber sehr unflexibel, da zunächst immer ein passendes 3-dimensional korrigiertes Profilierzahnrad hergestellt werden muss, damit dann dessen Oberflächenstruktur über die Schleifschnecke wiederum auf die fertige Verzahnung übertragen werden kann. Änderungen am Profilierzahnrad sind sehr arbeitsaufwendig und können somit innerhalb einer Serienfertigung nicht kurzfristig umgesetzt werden.

Die Schriften DE 197 06 867 A1 und DE 37 04 607 beschreiben jeweils ein Verfahren zum Diagonalwälzschleifen von Verzahnungen, um so Korrekturen auf den Zahnflanken abhängig von der Verzahnungsbreite zu erzeugen. Dies ist ein bewährtes und erprobtes Verfahren, um gezielt Verschränkungen vor allem bei balligen Schrägverzahnungen auf den Flanken einer Verzahnung zu erzeugen oder zu vermindern. Dazu wird der Eingriffswinkel der Schleifschnecke auf der rechten/linken Schneckenflanke kontinuierlich von einem zum anderen Werkzeugende hin verändert und das Werkzeug wird entsprechend der Werkstückbreitenposition beim Schleifvorgang in Achsrichtung des Werkzeuges vershiftet. Diese Verfahren ist aber alleine nicht geeignet, gezielt Welligkeiten auf den Zahnflanken einer geschliffenen Verzahnung zu erzeugen. Hierzu ist eine Oberflächenmodifikation des Abrichtwerkzeuges und/oder der Schleifschnecke über der Zahnhöhe erforderlich. Ggf. sind sogar zusätzlich Achsbewegungen der Verzahnmaschine notwendig.

Die DE 195 17 359 betrifft die Bearbeitung eines Kegelradpaares, bei dem einer der Verzahnungspartner geschliffen und der zweite gehont wird, um ein geräuscharmes Laufgeräusch im Getriebe zu erzielen. Dies ist bei Stirnradgetrieben bereits bekannt. Die Oberflächenstruktur einer geschliffenen Verzahnung verläuft in Flankenrichtung der Verzahnung, die einer gehonten Verzahnung hat eine kommaförmige Struktur. Diese unterschiedlichen Richtungen der Oberflächenstruktur auf den Zahnflanken haben deutlich laufruhigere Eigenschaft als zwei Zahnräder, die mit demselben Hartfeinbearbeitungsverfahren bearbeitet wurden, wenn sie aufeinander abwälzen. Für die heute geltenden erhöhten Anforderungen an die Laufruhe einer Verzahnung im Getriebe ist die Kombination der zwei Bearbeitungsverfahren alleine aber nicht ausreichend. Vielmehr müssen zusätzlich noch weitere Maßnahmen ergriffen werden.

In der DE 10 2010 026 412 A1 wird ein Verfahren zum Teilwälzschleifen von Zahnflanken mit periodischer Zahnflankenmodifikation beschrieben. Bei diesem Verfahren wird das Werkzeug in wiederholten Hubbewegungen entlang der Zahnflanke geführt, wobei zwischen jeder Hubbewegung des Werkzeugs eine Zustellung in Normalrichtung erfolgt und das Werkstück während des einzelnen Hubes keine Wälzbewegung ausführt. Nachteilig an diesem Verfahren ist Vielzahl der notwendigen Hubbewegungen zur Bearbeitung einer einzelnen Zahnflanke und der damit verbundene hohe Zeitaufwand je Werkstück.

Bekannt ist dabei bereits, dass sich gleiche Welligkeiten ohne Phasenverschiebungen auf den Zahnflanken der miteinander in Eingriff stehenden Verzahnungen an allen Zähnen beim Abwälzen üblicherweise zu deutlich geringeren Geräuschanregungen führen und damit weniger geräuschkritisch sind als Werkstücke mit Welligkeiten die sich ergänzen.

Weiterhin bekannt ist, dass sich jedem Punkt auf der Zahnflanke ein Drehwinkel des Zahnrades zuordnen lässt, den seine Lage beim Abwälzen charakterisiert. Im Umkehrschluss lässt die Messung des Drehwinkels bzw. in diesem Fall des Drehwinkelfehlers nun auf Punkte auf den Zahnflanken zurückführen. Wenn nun also der Drehwegfehler der Verzahnung aufgezeichnet wird, ergeben sich Bereiche, in denen der Drehwinkel zu klein oder zu groß gegenüber dem theoretisch berechenbaren Wert ist, also Bereiche, an denen die Drehbewegung vorauseilt oder zurückliegt. Diese Ungleichförmigkeit der Drehbewegung führt zu einer Schwingungsanregung des Getriebesystems.

Ziel der Anmeldung ist nun die Gleichförmigkeit der Drehbewegung zu erhöhen und damit die Schwingungsanregung des Getriebes zu vermeiden oder zumindest zu minimieren.

Es soll also ein Verfahren zur Herstellung einer geräuschoptimierten Verzahnung mit Zahnflankenmodifikationen in Form von Welligkeiten auf den Zahnflanken bereitgestellt werden, wobei die Amplitude, Frequenz und Phasenlage der Welligkeit aus der Messung des Drehwegfehlers des Getriebes bestimmt wird und als Eingabewert für die Verzahnungsschleifmaschine dient.

Diese Aufgabe wird durch ein Verfahren zum Herstellen eines Werkstücks gemäß Anspruch 1 gelöst. Weitere vorteilhafte Ausführungsformen des Verfahrens sind Gegenstand der sich anschließenden abhängigen Ansprüche.

In den Bereichen, in denen das Zahnrad nacheilt, muss also dafür gesorgt werden, dass früher ein Kontakt der Wälzpartner zueinander stattfindet. Also muss in diesen Bereichen mehr Material auf der Zahnflanke, also ein Welligkeitshochpunkt bei der Bearbeitung erzeugt werden. Dort wo die Drehbewegung vorauseilt, muss nun umgekehrt mehr Material im Hartfeinbearbeitungsprozess entfernt werden. Dabei gilt es allerdings zu berücksichtigen, dass Punkte wie Eingriffs- und Austrittstoß, Änderung der Zahnkraft bzw. die Zahnverformung sowie die Überdeckungsvergrößerung unter Last berücksichtigt werden, um einen möglichst gleichmäßigen und konstanten Zahneingriff bzw. eine möglichst kontinuierlichen Abrollung der Wälzpartner aufeinander vor allem unter Last zu erreichen und so eine laufruhige Verzahnung zu erhalten.

Hierzu werden die Verzahnungen im Eingriff unter Lasteingriffsbedingungen auf einer externen Messeinrichtung (Messmaschine, Getriebeprüfstand, Geräuschprüfstand, etc.) vermessen und der von den Verzahnungen erzeugte Drehwegfehler wird aufgezeichnet. Dieser Drehwegfehler wird an die Steuerungssoftware der Verzahnmaschine übergeben. Über eine Ausgleichsrechnung werden Ungleichmäßigkeiten bei den Messergebnissen geglättet und das Ergebnis wird in mindestens eine periodische Funktion zur Beschreibung der notwendigen Welligkeit in Profil- und Flankenrichtung umgerechnet.

Mit diesen Funktionen (mindestens eine je Wälzpartner) errechnet die Steuerungssoftware der Verzahnmaschine nun Welligkeiten auf den Zahnflanken der am Eingriff beteiligten Zahnradpaarungen, die unter den gegebenen Eingriffsverhältnissen zu einem geräuscharmen Zahneingriff führen und erstellt daraus ein Bearbeitungsprogramm, mit dem die jeweilige Verzahnungen hartfeinbearbeitet werden müssen.

Das Bearbeitungsprogramm enthält die zur Erzeugung dieser Welligkeit notwendigen Maschinenbewegungen und bildet diese, entweder auf einem zugeordneten Abrichtwerkzeug und/oder als Anweisung zur Bewegung der Maschinenachsen bei der Bearbeitung des Werkstückes, ab.

Mit diesem Bearbeitungsprogramm müssen dann die am Abwälzprozess beteiligten Verzahnungen, unter Berücksichtigung der Eingriffsbedingungen und des Übersetzungsverhältnisses entsprechend bearbeitet werden und mit den genau zueinander passenden Welligkeiten auf den Zahnflanken im Hartfeinbearbeitungsprozess versehen werden.

Zur Erzeugung der Welligkeiten können verschiedene Bearbeitungsverfahren zum Einsatz kommen. Die einfachste Variante ist dabei, die Welligkeiten mit dem Abrichtwerkzeug gezielt auf das Hartfeinbearbeitungswerkzeug zu übertragen und damit die Werkstücke zu bearbeiten. Unter Berücksichtigung des Übersetzungsverhältnisses werden die Welligkeiten dann vom Werkzeug direkt auf die Zahnradflanken der bearbeiteten Verzahnung übertragen. Dieses Verfahren ist für nicht bzw. wenig modifizierte Zahnflanken einsetzbar.

Wenn komplexere Flankenmodifikationen notwendig sind kommen andere Verfahren zum Einsatz, wie z.B. eine Bearbeitung der Zahnflanken mit einer Schleifschnecke bei der über der Zahnhöhe nur bestimmte Bereiche aktiv sind, wobei sich die Lage dieser Bereiche über der Werkzeugbreite bzgl. der Zahnhöhe ändert. Das Werkzeug wird dann im Diagonalschleifverfahren eingesetzt und erzeugt so eine gezielte, geräuscharme Profilmodifikation in Form einer Mikrowelligkeit. Durch wiederholtes Verschieben und wieder Ineingriffbringen des Schleifwerkzeuges kommen die erhabenen Bereiche auf dem Schleifwerkzeug an unterschiedlichen Flankenpositionen zum Einsatz und erzeugen so die geforderte Welligkeit auf den Zahnflanken.

Ein weiteres mögliches Verfahren arbeitet mit einer gezielten Erzeugung einer Taumelbewegung und/oder einer Exzentrizität eines eingesetzten Schleif- oder Honwerkzeuges. Auch dadurch wird erreicht, dass eine Profilmodifikation oder - welligkeit, insbesondere eine definierte periodische Flankenwelligkeit auf der aktiven Oberfläche des damit geschliffenen oder gehonten Werkstückes erzeugt wird.

Eine zusätzliche Messeinrichtung in der Verzahnmaschine kann selbsttätig das Bearbeitungsergebnis verifizieren und vorzugsweise kann in einem anschließenden Optimierungschliff das Ergebnis der Welligkeit noch besser an das gewünschte Endergebnis angepasst werden.

Da es sich bei der Bearbeitung um eine Serienfertigung mit großer Losgröße handelt, werden diese Iterationschritte nur bei einigen wenigen Werkstücken am Beginn der Serienfertigung notwendig sein bis das gewünschte Ergebnis erzielt ist. Daher lohnt sich auch der Aufwand. In der sich anschließenden Serienfertigung wird evtl. nur noch nach einem Abrichtzyklus oder nach einem Werkzeugwechsel nachgemessen, ob das Ergebnis noch mit den Vorgaben übereinstimmt.

Die Anzahl und Häufigkeit der Messzyklen hängt von den Anforderungen an das fertig bearbeitete Werkstück ab. Je enger die Toleranzen und je höher die Anforderungen sind, umso häufiger muss nachgemessen und ggf. nachjustiert werden.

Wenn die Serie dann wiederholt wird, müssen ebenfalls nur noch geringe Anpassungen vorgenommen werden, da die Grundeinstellungen zusammen mit den Werkstückdaten von der Maschinensteuerung gespeichert werden und somit für die nächst Serie verfügbar bleiben.

Weitere Einzelheiten und Vorteile der Erfindung sollen anhand des in den Zeichnungen dargestellten Ausführungsbeispiels näher erläutert werden. Dabei zeigen:
- Fig. 1:: Verzahnungsschleifmaschine nach dem Stand der Technik und
- Fig. 2a,2b: 3-dimensionale Darstellung einer möglichen Zahnflankenstruktur eines Zahnradzahnes.

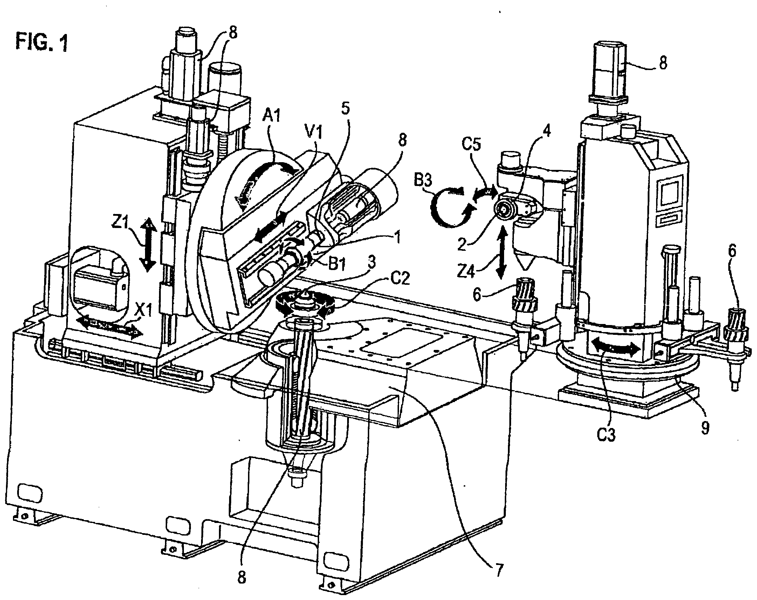

Figur 1 zeigt eine perspektivische Ansicht einer Verzahnmaschine, insbesondere einer Wälz- und Profilschleifmaschine zur Durchführung der erfindungsgemäßen Verfahren zur Herstellung einer Profilmodifikation oder -welligkeit, insbesondere einer periodischen Flankenwelligkeit auf einem zu verzahnenden Werkstück. Die Verzahnmaschine weist dabei die für die Bearbeitung notwendigen Freiheitsgrade auf und kann insbesondere die eingezeichneten Bewegungen A1, B1, B3, C2, C3, C5, V1, X1, Z1 sowie Z4 ausführen. Im Einzelnen beschreibt X1 die Radialbewegung des Ständerschlittens, V1 die Tangentialbewegung bzw. Shiftbewegung des Werkzeuges, Z1 die Axialbewegung des Werkzeuges, B1 die Drehbewegung des Werkzeuges, C2 die Drehbewegung des Werkstückes, A1 die Schwenkbewegung des Werkzeuges, Z4 die Vertikalbewegung des Gegenhalters, C3 die Drehbewegung des Ringladers, B3 die Drehbewegung des Abrichtwerkzeuges sowie C5 den Schwenkwinkel des Abrichtwerkzeuges zur Änderung des Eingriffswinkels α am Schleifwerkzeug.

Eine mögliche Messeinrichtung zur Messung der Zahnflanken innerhalb der Verzahnmaschine ist in dieser Figur nicht dargestellt, könnte aber am Bearbeitungskopf 5 angeordnet sein und so ebenfalls die beim Bearbeitungsprozess verwendeten Maschinenachse mit verwenden, insbesondere sind dies die Achsen Z1, V1, X1 und C2.
Diese Achsen Z1, V1, X1 und C2 sowie ggf., die A1 können ebenfalls zur Erzeugung der Welligkeit auf der Zahnflanken genutzt werden, soweit diese nicht schon mit einem entsprechend profilierten bzw. abgerichteten Abrichtwerkzeug auf das Schleifwerkzeug übertragen wird. Alternativ können sie natürlich auch noch zusätzlich beim Profilieren oder Abrichten des Bearbeitungswerkzeuges zielgerichtet angesteuert werden.

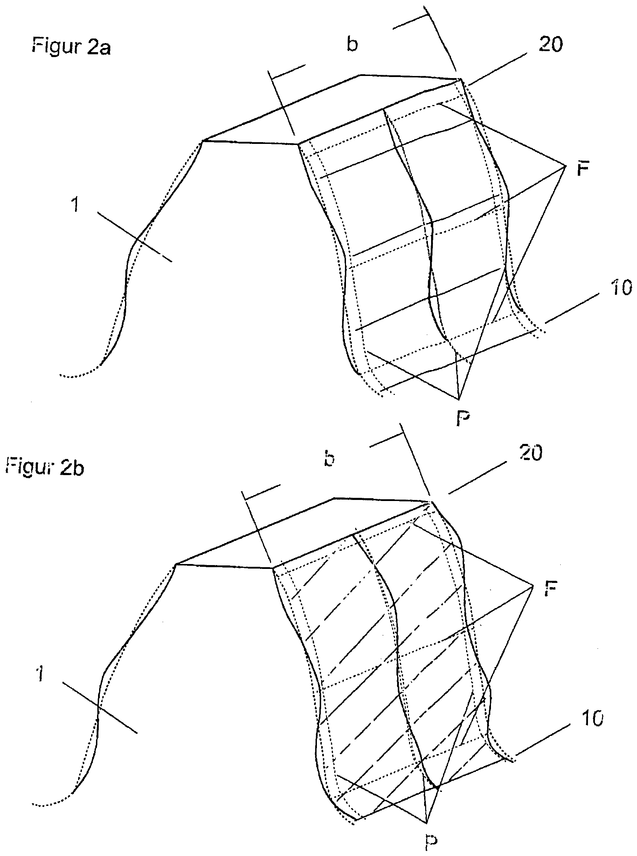

Die Figuren 2a und 2b zeigen eine dreidimensionale Darstellung einer möglichen Zahnflankenstruktur eines einzelnen Zahns 1 eines Zahnrades. Die periodische Struktur parallel zur Flankenrichtung entsteht bei einem Hartfeinbearbeitungsprozess wie er gemäß der Erfindung genutzt wird. Die Amplitude, Frequenz und Phasenlage werden gemäß den Erfordernissen aus der Drehwegfehlermessung von der Verzahnmaschinensoftware festgelegt. In der Darstellung ist der Amplitudenverlauf der Oberflächenwelligkeit der Zahnflanke gegenüber einer unmodifiziert hartfeinbearbeiteten Verzahnung ohne Welligkeiten (gestrichelte Linie) dargestellt. Zur Verdeutlichung sind zusätzlich weitere Profil-(P) und Flankenlinien (F) eingezeichnet,-wobei die Profillinien (P) auf jeder Flankenseite vom Zahnkopf 20 bis hin zum Zahnfussbereich 10 verlaufen. Die Flankenlinien (F) erstrecken sich über die gesamte Zahnbreite (b), d.h. quer zur Ausrichtung der Profillinien.
Weiterhin ist den Figuren zu entnehmen, dass die Flankenstruktur in Querrichtung, d.h. über die gesamte Zahnbreite (b) konstant ist, also in dieser Orientierung keine Welligkeit aufweist. Die Wellenausbreitung verläuft ausschließlich vom Zahnkopf 20 bis zum Zahnfuß 10.

## Patentansprüche

1. Verfahren zum Hartfeinbearbeiten von Zahnflanken mit Korrekturen und/oder Modifikationen auf einer Verzahnmaschine, wobei jeweils Zahnradpaarungen, die miteinander innerhalb eines Getriebes oder einer Prüfeinrichtung im Eingriff sind, unter Berücksichtigung der jeweiligen Gegenflanken bearbeitet werden und wobei die Zahnflanken der betroffenen Werkstücke mit periodischen Welligkeitskorrekturen oder -modifikationen versehen werden,
**dadurch gekennzeichnet,**
**dass** mittels Drehwegfehlermessung der Zahnradpaarungen in einer Verzahnungsmesseinrichtung und/oder Getriebe der Drehfehlerverlauf bestimmt wird und dass dieses Messergebnis als Eingangsgröße zur Definition der Amplitude, Frequenz und Phasenlage für die periodischen Flankenwelligkeitskorrekturen auf den Zahnflanken der Zahnradpaarungen für die Fertigung in der Verzahnungsmaschine dient.

2. Verfahren nach Anspruch 1, **dadurch gekennzeichnet, dass** die Zahnflanken eines bearbeiteten Werkstücks mittels einer Messeinrichtung vermessen werden und bedarfsweise die Verzahnung nochmals unter Berücksichtigung des erhaltenen Messergebnisses einer Welligkeitskorrektur oder -modifikation unterzogen wird.

3. Verfahren nach Anspruch 1, **dadurch gekennzeichnet, dass** die Werkstücke einer Zahnradpaarung nacheinander auf derselben Verzahnmaschine bearbeitet werden.

4. Verfahren nach Anspruch 1, **dadurch gekennzeichnet, dass** die Werkstücke einer Zahnradpaarung auf mehreren Verzahnmaschinen bearbeitet werden, auf denen untereinander die Bearbeitungsprogramme austauschbar sind.

5. Verfahren nach einem der vorhergehenden Ansprüche, **dadurch gekennzeichnet, dass** das Hartfeinbearbeitungswerkzeug mittels Abrichtverfahren abgerichtet und profiliert wird, wobei die Abrichtdaten für das Werkzeug entsprechend den erforderlichen Daten zur Erzeugung einer periodischen Zahnflankenmodifikation auf dem fertigen Werkstück von der Verzahnmaschine festgelegt werden.

6. Verfahren zum Hartfeinbearbeiten eines Werkstückes mit einer korrigierten Verzahnungsgeometrie und/oder modifizierter Oberflächenstruktur nach einem der vorhergehenden Ansprüche, **dadurch gekennzeichnet, dass** mittels eines Hartfeinbearbeitungswerkzeuges auf jeweils wenigstens einer Zahnflanke der Werkstücke eine periodische Flankenwelligkeit erzeugt wird.

7. Verfahren zum Hartfeinbearbeiten eines Werkstückes mit einer korrigierten Verzahnungsgeometrie und/oder modifizierter Oberflächenstruktur nach einem der vorhergehenden Ansprüche, **dadurch gekennzeichnet, dass** mittels eines Hartfeinbearbeitungswerkzeuges nur bei den Zähnen eines Zahnrades einer Zahnradpaarung eine periodische Flankenwelligkeit erzeugt wird.

8. Verfahren zum Hartfeinbearbeiten eines Werkstückes mit einer korrigierten Verzahnungsgeometrie und/oder Oberflächenstruktur nach einem der vorhergehenden Ansprüche, **dadurch gekennzeichnet, dass** mittels Hartfeinbearbeitungswerkzeug am ersten Werkstück der Zahnradpaarung eine periodische Flankenwelligkeit erzeugt wird, um den Drehwegfehler der Zahneingriffsfrequenz zu kompensieren.

9. Verfahren zum Hartfeinbearbeiten eines Werkstückes mit einer korrigierten Verzahnungsgeometrie und/oder Oberflächenstruktur nach einem der vorhergehenden Ansprüche, **dadurch gekennzeichnet, dass** mittels Hartfeinbearbeitungswerkzeug am zweiten Werkstück der Zahnradpaarung eine periodische Flankenwelligkeit erzeugt wird, um den Drehwegfehler der doppelten (oder einer mehrfachen) Zahneingriffsfrequenz zu kompensieren.

10. Verzahnmaschine zur Durchführung des Verfahrens nach einem der vorhergehenden Ansprüche mit einer Berechnungssoftware zur Berechnung von Zahnflankenkorrektur in Form von periodischen Flankenwelligkeit deren Amplitude, Frequenz und Phasenlage abhängig vom gemessenen Drehwegfehler bestimmt wird und mit einer Software, die daraus ein modifiziertes Bearbeitungsprogramm erstellt, welches entsprechende Korrekturen auf den Zahnflanken einer gefertigten Zahnradpaarung erzeugt.

11. Computerprogramm zur Installation auf einer Verzahnmaschine mit einer Eingabe- oder Datenübernahme zur Entgegennahme der Messwerte einer externen Messeinrichtung und mit einer Rechenfunktion, um mit den externen Messwerten Bearbeitungsprogramme zur Bearbeitung von Verzahnungen mit periodischen Welligkeiten auf den Zahnflanken nach einem Verfahren gemäß den Ansprüchen 1 bis 9 zu erzeugen.

12. Computerprogramm nach Anspruch 11 mit einer Messfunktion zur Überprüfung der erzeugten periodischen Welligkeiten auf den Zahnflanken und mit einer Korrekturfunktion zur Korrektur des Bearbeitungsprogrammes, um Abweichungen zwischen den gemessenen und den erzielten Welligkeiten zu minimieren.

## Claims

1. A method for hard-fine machining of tooth flanks with corrections and/or modifications on a gear-cutting machine, wherein respective toothed wheel pairings which mesh with one another within a transmission or a test device are machined while taking account of the respective mating flanks, and wherein the tooth flanks of the relevant workpieces are provided with periodic waviness corrections or waviness modifications,
**characterized in that**
the rotational error extent is determined by means of rotational distance error measurement of the toothed wheel pairs in a gear measuring device and/or transmission; and **in that** this measurement result serves as an input value for defining the amplitude, frequency and phase position for the periodic flank waviness corrections on the tooth flanks of the toothed wheel pairings for production in the gear-cutting machine.

2. A method in accordance with claim 1, **characterized in that** the tooth flanks of a machined workpiece are measured by means of a measuring device and the gear is again subjected as required to a waviness correction or waviness modification while taking account of the obtained measurement result.

3. A method in accordance with claim 1, **characterized in that** the workpieces of a toothed wheel pair are machined after one another on the same gear-cutting machine.

4. A method in accordance with claim 1, **characterized in that** the workpieces of a toothed wheel pair are machined on a plurality of gear-cutting machines on which the machining programs can be swapped between one another.

5. A method in accordance with any one of the preceding claims, **characterized in that** the hard-fine machining tool is dressed and profiled by means of dressing processes, wherein the dressing data for the tool are fixed by the gear-cutting machine in accordance with the required data for generating a periodic tooth flank modification on the finished workpiece.

6. A method of hard-fine machining a workpiece with a corrected gear geometry and/or a modified surface structure in accordance with one of the preceding claims, **characterized in that** a periodic flank waviness is generated on a respective at least one tooth flank of the workpieces by means of a hard-fine machining tool.

7. A method of hard-fine machining a workpiece with a corrected gear geometry and/or a modified surface structure in accordance with one of the preceding claims, **characterized in that** a periodic flank waviness is only generated on the teeth of a toothed wheel of a toothed wheel pair by means of a hard-fine machining tool.

8. A method of hard-fine machining a workpiece with a corrected gear geometry and/or surface structure in accordance with one of the preceding claims, **characterized in that** a periodic flank waviness is produced at the first workpiece of the toothed wheel pair by means of a hard-fine machining tool to compensate the rotational distance error of the tooth meshing frequency.

9. A method of hard-fine machining a workpiece with a corrected gear geometry and/or surface structure in accordance with one of the preceding claims, **characterized in that** a periodic flank waviness is produced at the second workpiece of the toothed wheel pair by means of a hard-fine machining tool to compensate the rotational distance error of twice (or of a multiple of) the tooth meshing frequency.

10. A gear-cutting machine for carrying out the method in accordance with one of the preceding claims having calculation software for calculating tooth flank correction in the form of periodic flank waviness whose amplitude, frequency and phase position are determined in dependence on the measured rotational distance error and having software that creates a modified machining program from this which generates corresponding corrections on the tooth flanks of a finished toothed wheel pair.

11. A computer program for installation on a gear-cutting machine having an input takeover or data takeover for accepting the measurement values of an external measuring device and having a calculation function to generate machining programs using the external measurement values for machining gears with periodic waviness on the tooth flanks in accordance with a method in accordance with claims 1 to 9.

12. A computer program in accordance with claim 11 having a measurement function for checking the generated periodic waviness on the tooth flanks and having a correction function for correcting the machining program to minimize differences between the measured waviness and the achieved waviness.

## Revendications

1. Procédé d'usinage dur de précision de flancs de dent avec des corrections et/ou des modifications sur une machine à tailler les engrenages, des couples de roues dentées, qui sont engrenées l'une dans l'autre dans un train d'engrenages ou dans un dispositif de contrôle, étant usinés en tenant compte des flancs conjugués respectifs et les flancs de dent des pièces concernées étant pourvus de corrections ou de modifications d'ondulation périodiques,
**caractérisé en ce que**,
au moyen d'une mesure d'erreur de parcours de rotation des couples de roues dentées dans un dispositif de mesure d'engrenages et/ou train d'engrenages, la variation de l'erreur de rotation est déterminée et **en ce que** ce résultat de mesure sert de grandeur d'entrée pour la définition de l'amplitude, de la fréquence et de la position de phase pour les corrections d'ondulation de flanc périodiques sur les flancs de dent des couples de roues dentées pour la fabrication dans la machine à tailler les engrenages.

2. Procédé selon la revendication 1, **caractérisé en ce que** les flancs de dent d'une pièce usinée sont mesurés au moyen d'un dispositif de mesure et l'engrenage est soumis une nouvelle fois si besoin à une correction ou modification d'ondulation en tenant compte du résultat de mesure obtenu.

3. Procédé selon la revendication 1, **caractérisé en ce que** les pièces d'un couple de roues dentées sont usinées successivement sur la même machine à tailler les engrenages.

4. Procédé selon la revendication 1, **caractérisé en ce que** les pièces d'un couple de roues dentées sont usinées sur plusieurs machines à tailler les engrenages, sur lesquelles les programmes d'usinage sont interchangeables.

5. Procédé selon l'une des revendications précédentes, **caractérisé en ce que** l'outil d'usinage dur de précision est dressé et profilé au moyen d'un procédé de dressage, les données de dressage pour l'outil étant définies en fonction des données requises pour générer une modification de flanc de dent périodique sur la pièce fabriquée par la machine à tailler les engrenages.

6. Procédé d'usinage dur de précision d'une pièce avec une géométrie d'engrènement corrigée et/ou une structure de surface modifiée selon l'une des revendications précédentes, **caractérisé en ce que**, au moyen d'un outil d'usinage dur de précision, une ondulation de flanc périodique est générée sur respectivement au moins un flanc de dent des pièces.

7. Procédé d'usinage dur de précision d'une pièce avec une géométrie d'engrènement corrigée et/ou une structure de surface modifiée selon l'une des revendications précédentes, **caractérisé en ce que**, au moyen d'un outil d'usinage dur de précision, une ondulation de flanc périodique est générée uniquement pour les dents d'une roue dentée d'un couple de roues dentées.

8. Procédé d'usinage dur de précision d'une pièce avec une géométrie d'engrènement et/ou une structure de surface corrigée selon l'une des revendications précédentes, **caractérisé en ce que**, au moyen d'un outil d'usinage dur de précision, une ondulation de flanc périodique est générée sur la première pièce du couple de roues dentées pour compenser l'erreur de parcours de rotation de la fréquence d'engrènement de dents.

9. Procédé d'usinage dur de précision d'une pièce avec une géométrie d'engrènement et/ou une structure de surface corrigée selon l'une des revendications précédentes, **caractérisé en ce que**, au moyen d'un outil d'usinage dur de précision, une ondulation de flanc périodique est générée sur la deuxième pièce du couple de roues dentées pour compenser l'erreur de parcours de rotation de la double (ou d'une multiple) fréquence d'engrènement de dents.

10. Machine à tailler les engrenages destinée à exécuter le procédé selon l'une des revendications précédentes, comprenant un logiciel de calcul pour calculer la correction de flanc de dent sous la forme d'ondulations de flanc périodiques dont l'amplitude, la fréquence et la position de phase est déterminée en fonction de l'erreur de parcours de rotation mesurée, et comprenant un logiciel qui crée à partir de cela un programme d'usinage modifié, qui génère des corrections correspondantes sur les flancs de dent d'un couple de roues dentées fabriqué.

11. Programme informatique destiné à être installé sur une machine à tailler les engrenages, comprenant un transfert de saisie ou de données pour réceptionner les valeurs de mesure d'un dispositif de mesure extérieur et comprenant une fonction de calcul pour générer des programmes d'usinage avec les valeurs de mesure extérieures pour l'usinage d'engrenages avec des ondulations périodiques sur les flancs de dent suivant un procédé selon les revendications 1 à 9.

12. Programme informatique selon la revendication 11, comprenant une fonction de mesure pour le contrôle des ondulations périodiques générées sur les flancs de dent et une fonction de correction pour la correction du programme d'usinage, afin de minimiser les écarts entre les ondulations mesurées et obtenues.
